# EUROPÄISCHE PATENTANMELDUNG

(11) **EP 1 358 792 A2**
(43) Veröffentlichungstag der Anmeldung: **05.11.2003**
(21) Anmeldenummer: 03008461.0
(22) Anmeldetag: 11.04.2003
(51) Int. Cl.: A01G 31/06

(54) **Regalanordnung zur Aufzucht von Pflanzen**

(30) Priorität: 03.05.2002 DE 10219980
(71) Anmelder: Schako Klima Luft Ferdinand Schad KG, 78600 Kolbingen (DE)
(72) Erfinder: Müller, Rainer, 78600 Kolbingen (DE)
(74) Vertreter: Weiss, Peter, Dr.

(57) **Zusammenfassung**

Bei einer Regalanordnung zur Aufzucht von Pflanzen, in welcher die Pflanzen in Pflanzkästen (6) angeordnet sind, sollen die Pflanzkästen (6) zur einfachen Befüllung bzw. Entladung herausziehbar und/oder abkippbar sein.

## Beschreibung

Die vorliegende Erfindung betrifft eine Regalanordnung zur Aufzucht von Pflanzen, in welcher die Pflanzen in Pflanzkästen angeordnet sind.

Derartige Regalanordnungen finden vor allem in Gewächshäusern Anwendung und sind in vielfältiger Form und Ausführung bekannt. So wird in der DE 197 40 336 ein Raum beschrieben, in welchem ein Pflanzensubstrat in übereinander und nebeneinander angeordneten, ausziehbaren Schubladen in einer Regalanordnung eingefüllt ist. Die einzelnen Schubladen können von der Bedienperson mittels einer Liftanlage erreicht werden. Der Nachteil hierbei besteht jedoch darin, dass ein Bestücken und ein Entladen der Schubladen nicht einfach ist. Zwar lassen sich die Schubladen herausziehen, jedoch nicht abkippen, um das Substrat einfach aus der Schublade entladen zu können.

Der vorliegenden Erfindung liegt die Aufgabe zugrunde, eine Regalanordnung zur Aufzucht von Pflanzen zu schaffen, bei welcher die oben genannten Nachteile vermieden werden, und in welcher ein Arbeiten noch weiter optimiert ist.

Zur Lösung dieser Aufgabe führt, dass die Pflanzkästen zur einfachen Befüllung bzw. Entladung herausziehbar und/oder abkippbar sind.

Das Herausziehen der Pflanzkästen kann mittels üblicher und bekannter Ausziehmechanismen erfolgen. So sind beispielsweise teleskopartige Auszüge od. dgl. denkbar. Hier sind Auszüge verwendet worden, in welchen Laufrollen bewegbar geführt sind. Die Pflanzkästen sind über Befestigungswinkel und Wellenstummel mit diesen Laufrollen verbunden, wobei die Wellenstummel in Öffnungen der Befestigungswinkel drehbar gelagert sind. Durch diese drehbare Lagerung wird auch ein Abkippen der Pflanzkästen ermöglicht.

Ein Abkippen der Pflanzkästen kann auf unterschiedliche Arten erfolgen. So kann der einzelne Pflanzkasten beispielsweise in seiner Breite schmaler sein als der Abstand zwischen parallel verlaufenden Auszügen. Somit kann der Pflanzkasten zwischen den Auszüge abgekippt werden.

Ein Halten der Pflanzkästen in der horizontalen Position kann auf beliebige Art und Weise erfolgen. Beispielsweise können an den Seitenrahmen Rückzugsbolzen vorgesehen sein, welche in ein dafür vorgesehenes Halteelement an den Pflanzkästen einfahren können, wenn die Pflanzkästen in der horizontalen Position gehalten werden sollen. Um die Pflanzkästen nach vorne bewegen zu können, muss lediglich der Rückzugsbolzen aus dem Halteelement an dem Pflanzkasten zurückgezogen werden. Weitere Haltemechanismen sind denkbar und sollen von der vorliegenden Erfindung umfasst sein.

Die Pflanzkästen sind an ihren Vorderseiten bevorzugt mit Griffleisten versehen, um ihre Handhabung zu erleichtern. Andere Möglichkeiten, wie beispielsweise zwei einzelne Griffe od. dgl., sind ebenfalls denkbar und sollen von der vorliegenden Erfindung umfasst sein.

Die Pflanzkästen können desweiteren in den Regalen in verschiedenen Abständen und in unterschiedlichen Höhen angeordnet werden. Die Anordnung richtet sich beispielsweise nach den Inhalt der Pflanzkästen, den es eventuell zu sortieren gilt, oder nach der zu erwartenden Höhe einer Pflanze. Je höher das Wachstum der Pflanze ist, desto höher muss selbstverständlich auch der Abstand zwischen den einzelnen Pflanzkästen sein und umgekehrt.

Ferner können auf der Unterseite eines jeden Pflanzkastens Leuchten angeordnet sein, damit die darunter liegenden Pflanzkästen heller beleuchtet werden können. Dies ist vor allem für lichtempfindlichere Pflanzen von grosser Bedeutung.

Die Möglichkeit der Verwendung der Pflanzkästen in kleinen Gewächshäusern ist ebenfalls gegeben. Dazu muss lediglich die Anzahl der Pflanzkästen und die Regale, in denen sie untergebracht werden, entsprechend gering gehalten werden. Gedacht ist ebenfalls an eine Verwendung der Regalanordnung im Freien.

Weitere Vorteile, Merkmale und Einzelheiten der Erfindung ergeben sich aus der nachfolgenden Beschreibung bevorzugter Ausführungsbeispiels sowie anhand der Zeichnung; diese zeigt in
Figur 1 eine perspektivische Vorderansicht einer Regalanordnung mit Pflanzkästen gemäss der vorliegenden Erfindung;
Figur 2 einen Schnitt durch eine verkleinerte Regalanordnung mit Pflanzkästen in einem Gewächshaus; und
Figur 3 eine Vorderansicht des Schnittes durch die verkleinerte Regalanordnung mit Pflanzkästen in Figur 2.

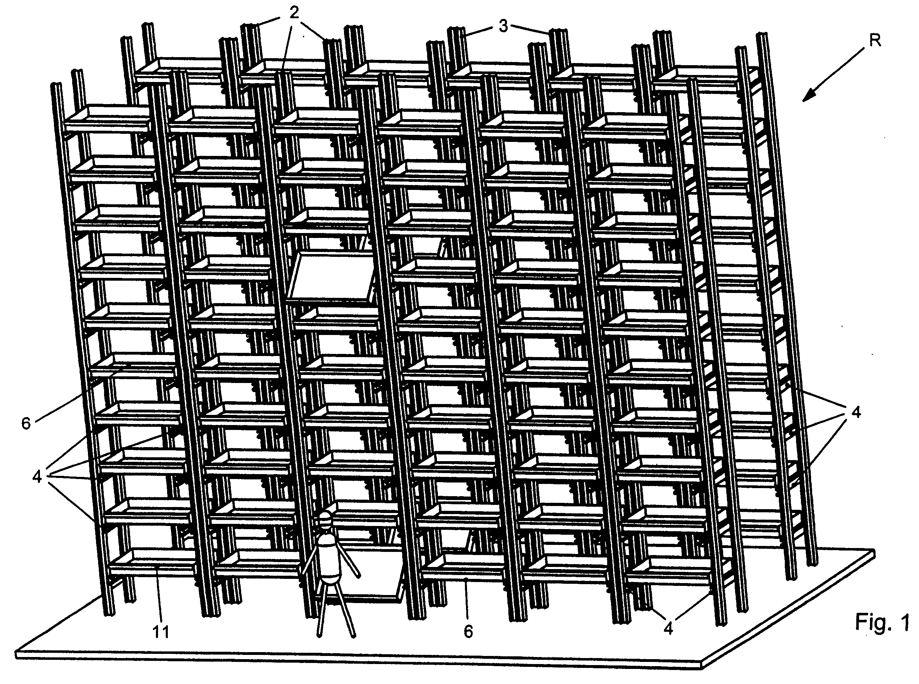

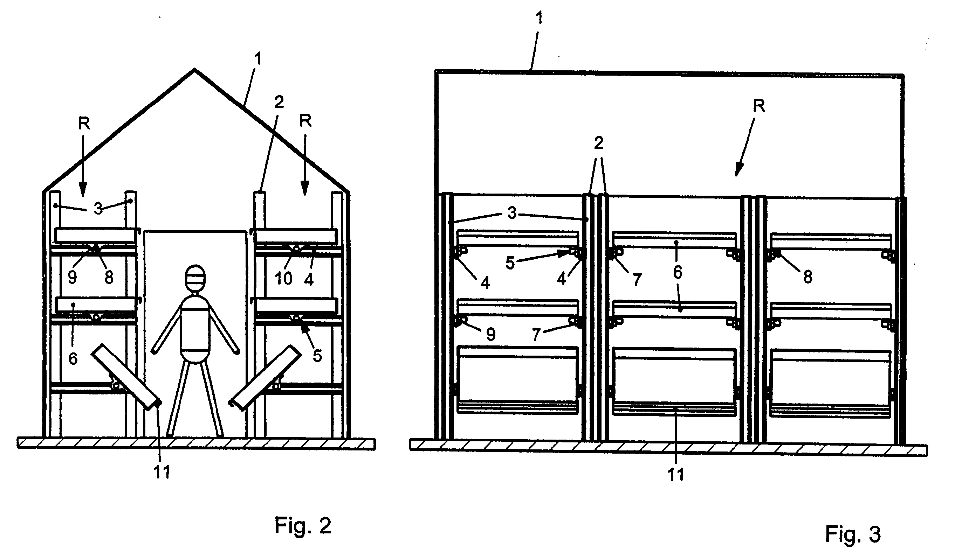

Gemäss den Figuren 1 bis 3 weist eine Regalanordnung R zur Aufstellung in einem Gewächshaus 1, siehe Figuren 2 und 3, mehrere, nebeneinander angeordnete Regale 2 auf. Jeweils zwei sich gegenüberliegende Seitenrahmen 3 eines solchen Regals 2 sind dabei mittels Auszügen 4 verbunden. Übereinander angeordnete Auszüge 4 verlaufen somit parallel.

In zwei sich gegenüberliegenden Auszügen 4 ist jeweils eine Laufeinrichtung 5 eines Pflanzkastens 6 geführt. Die Laufeinrichtung 5 besteht aus einer Laufrolle 7, welche über einen Wellenstummel 8 mit einem Befestigungswinkel 9 verbunden ist. Der Wellenstummel 8 ist dabei drehbar in einer entsprechenden Öffnung 10 in dem Befestigungswinkel 9 gelagert, so dass ein Kippen des Befestigungswinkels 9 und damit des Pflanzkastens 6 um den Wellenstummel 8 möglich ist. Das Befestigungswinkel 9 wiederum ist an dem Pflanzkasten 6 befestigt.

Der Pflanzkasten 6 selbst besteht aus einem rechteckigen Kasten, welchem an seiner Vorderseite eine Griffleiste 11 zur besseren Handhabung des Pflanzkastens 6 zugeordnet ist.

Die Funktionsweise der vorliegenden Erfindung ist folgende:

Das Befüllen der Pflanzkästen 6 mit frischer Erde od. dgl. erfolgt ohne weitere Schwierigkeiten, indem die Pflanzkästen 6 mittels der Griffleisten 11 über die Laufeinrichtung 5 in den Auszügen 4 zu der Vorderseite der Regale 2 bewegt werden. Ein Stapler od. dgl. übernimmt anschliessend das Befüllen für die oberhalb der Reichweite einer Bedienperson liegenden Pflanzkästen 6. Das Befüllen der darunter liegenden Pflanzkästen 6 kann die Bedienperson selbst übernehmen.

Bei dem Auswechseln der Erde werden die Pflanzkästen 6 ebenfalls, wie oben beschrieben, zu der Vorderseite der Regale 2 bewegt. Hier werden die Pflanzkästen 6 abgekippt und die Erde fällt in einen darunter stehenden Behälter. Für die oberhalb der Reichweite einer Bedienperson liegenden Pflanzkästen 6 kann auch hier ein Stapler od. dgl. verwendet werden, wobei das Auswechseln der unteren Pflanzkästen 5 von der Bedienperson selbst erledigt werden kann. Anschliessend werden die Pflanzkästen 6 wieder in ihre horizontale Position gekippt und in die Regale 2 hinein geschoben.

### Positionszahlenliste

| | | | | | |
|---|---|---|---|---|---|
| 1 | Gewächshaus | 34 | | 67 | |
| 2 | Regal | 35 | | 68 | |
| 3 | Seitenrahmen | 36 | | 69 | |
| 4 | Auszug | 37 | | 70 | |
| 5 | Laufeinrichtung | 38 | | 71 | |
| 6 | Pflanzkasten | 39 | | 72 | |
| 7 | Laufrolle | 40 | | 73 | |
| 8 | Wellenstummel | 41 | | 74 | |
| 9 | Befestigungswinkel | 42 | | 75 | |
| 10 | Öffnung | 43 | | 76 | |
| 11 | Griffleiste | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Regalanordnung zur Aufzucht von Pflanzen, in welcher die Pflanzen in Pflanzkästen (6) angeordnet sind,
**dadurch gekennzeichnet,**
**dass** die Pflanzkästen (6) zur einfachen Befüllung bzw. Entladung herausziehbar und/oder abkippbar sind.

2. Vorrichtung nach Anspruch 1, **dadurch gekennzeichnet, dass** die Pflanzkästen (6) bevorzugt rechteckig ausgebildet und an ihrer Vorderseite mit einer Griffleiste (11) versehen sind.

3. Vorrichtung nach Anspruch 1 oder 2, **dadurch gekennzeichnet, dass** die Pflanzkästen (6) über Auszüge (4) mit Seitenrahmen (3) verbunden sind.

4. Vorrichtung nach einem der Ansprüche 1 bis 3, **dadurch gekennzeichnet, dass** die Pflanzkästen (6) über Befestigungswinkel (9) mit Wellenstummeln (8) verbunden sind.

5. Vorrichtung nach Anspruch 4, **dadurch gekennzeichnet, dass** der Wellenstummel (8) mit einer Laufrolle (7) verbunden ist.

6. Vorrichtung nach Anspruch 5, **dadurch gekennzeichnet, dass** die Laufrolle (7) in einem Auszug (4) der Regalanordnung (R) bewegbar ist.
